# EUROPEAN PATENT APPLICATION

(11) **EP 4 407 294 A1**
(43) Date of publication of application: **31.07.2024**
(21) Application number: 22889861.5
(22) Date of filing: 26.10.2022
(51) Int. Cl.: G01N 15/02, C21B 5/00, C21B 7/24

(54) **INFORMATION PROCESSING METHOD, INFORMATION PROCESSING DEVICE, INFORMATION PROCESSING SYSTEM, INFORMATION PROCESSING PROGRAM, AND BLAST FURNACE OPERATION METHOD**

(30) Priority: 02.11.2021 JP 2021179783
(71) Applicant: JFE Steel Corporation, Tokyo 100-0011 (JP)
(72) Inventor: TSUBOI, Toshiki, Tokyo 100-0011 (JP)
(74) Representative: Hoffmann Eitle
(86) International application number: PCT/JP2022/040025
(87) International publication number: WO 2023/080041

(57) **Abstract**

An information processing method includes: measuring profile data of deposited material that is a plurality of particles, the profile data including distance data to the deposited material or image data of the deposited material; detecting each of the plurality of particles based on the profile data; calculating an index based on the profile data; and extracting particles in a surface layer among the deposited material, based on results of the detecting for each of the plurality of particles and the index calculated based on the profile data.

## Description

### TECHNICAL FIELD

The present disclosure relates to an information processing method, an information processing device, an information processing system, an information processing program, and a method of operating a blast furnace.

### BACKGROUND

Devices capable of measuring particle size of each particle of granular industrial raw material such as coke with high measurement precision are known (see, for example, Patent Literature (PTL) 1).

### CITATION LIST

### Patent Literature

PTL 1: JP 2014-092494 A

### SUMMARY

### (Technical Problem)

When calculating a property of deposited raw material by extraction of data on the raw material through image processing, particles deposited below are hidden by overlapping particles above, and therefore calculation error of the property of the particles deposited below becomes larger. There is a demand for improved precision of particle property calculation by separating upper and lower layer particles to calculate a property.

Therefore, it would be helpful to provide an information processing method, an information processing device, an information processing system, and an information processing program that can improve particle property calculation precision, and a method of operating a blast furnace based on a calculated particle property.

### (Solution to Problem)

The information processing method according to an embodiment of the present disclosure comprises: measuring profile data of deposited material that is a plurality of particles, the profile data including distance data to the deposited material or image data of the deposited material; detecting each of the plurality of particles based on the profile data; calculating an index based on the profile data; and extracting particles in a surface layer among the deposited material, based on results of the detecting for each of the plurality of particles and the index calculated based on the profile data.

The information processing device according to an embodiment of the present disclosure comprises a controller configured to execute the information processing method.

The information processing system according to an embodiment of the present disclosure comprises the information processing device and a measuring device that outputs the profile data of the deposited material to the information processing device.

The information processing program according to an embodiment of the present disclosure is configured to cause a processor to execute the information processing method.

The method of operating a blast furnace according to an embodiment of the present disclosure comprises: calculating a property of a raw material to be charged into a blast furnace as the property of the surface layer particles by performing the information processing method; and setting operating conditions of the blast furnace based on a result of the calculating of the property of the raw material.

### (Advantageous Effect)

According to the information processing method, the information processing device, the information processing system, the information processing program, and the method of operating a blast furnace according to the present disclosure, particle property calculation precision may be improved. Further, a result of particle property calculation may be reflected in the method of operating a blast furnace.

### BRIEF DESCRIPTION OF THE DRAWINGS

In the accompanying drawings:
FIG. 1 is a schematic diagram illustrating an example configuration of an information processing system according to the present disclosure;
FIG. 2 is a block diagram illustrating an example configuration of an information processing system according to the present disclosure;
FIG. 3 is a flowchart illustrating example procedures of an information processing method according to the present disclosure;
FIG. 4 is a diagram illustrating an example of profile data of deposited material;
FIG. 5 is a diagram illustrating particles detected from the profile data in FIG. 4, differentiated as particle regions;
FIG. 6 is a diagram illustrating an example of an envelope generated as a curve tangent only to an upper convex part of a target signal;
FIG. 7 is a diagram illustrating an example of an envelope calculated with respect to profile data or deposited material;
FIG. 8A is a diagram illustrating an example of envelope calculation paths along a width direction of a conveyor;
FIG. 8B is a diagram illustrating an example of envelope calculation paths along a transport direction of a conveyor;
FIG. 9 is a diagram illustrating an example of an image in which a true value region is superimposed on profile data of deposited material;
FIG. 10 is a diagram illustrating an example of a result of determination of surface layer particles and lower layer particles; and
FIG. 11 is a graph illustrating an example of correlation between particle size of sieve analysis and calculated particle size.

### DETAILED DESCRIPTION

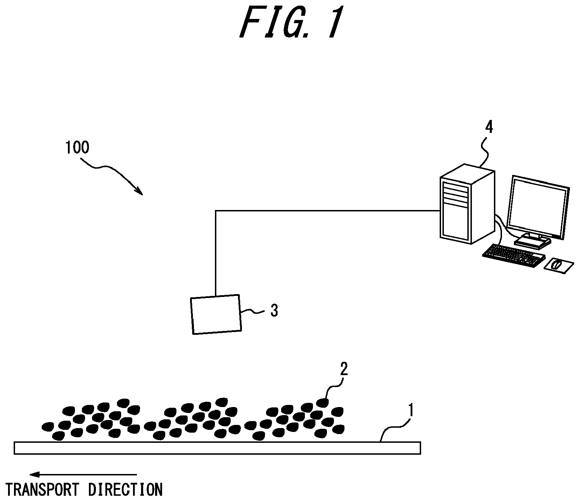

Embodiments of an information processing system 100 (see FIG. 1, for example), an information processing device 4 (see FIG. 1, for example), and an information processing method according to the present disclosure are described below, with reference to the drawings. Each drawing is schematic and may differ from actual implementation. Further, the following embodiments are examples of devices or methods for embodying the technical concept of the present disclosure, and are not limiting. That is, various changes may be made to the technical concept of the present disclosure within the technical scope described in the claims.

In a production process using a raw material such as a mineral, particle size, particle shape, or particle size distribution of the raw material affects operation of the production process. Therefore, there is a need for a property of a raw material to be measured and ascertained in advance. In particular, ascertaining particle size distribution of a raw material such as ore or coke that affects gas permeability in a blast furnace during blast furnace operation is important.

To ascertain particle size distribution of a raw material, particle size distribution may be analyzed by sampling and sieving a raw material. However, analysis using a sieve is time-consuming, and therefore reflecting analysis results in real time blast furnace operation is difficult. Therefore, there is a need for technology to measure particle size distribution of a raw material in real time. For example, particle size distribution of a raw material may be measured in real time by acquiring an image or shape of an upper portion of a raw material using a camera or a laser rangefinder.

To measure particle size distribution of a raw material, image data of a granular raw material on a conveyor may be captured and subjected to image processing. In such a case, when a granular raw material is deposited, a contour of a lower layer of the raw material deposited below a surface layer of the raw material is hidden by the surface layer of the raw material. Therefore, particle size of the raw material in the lower layer is likely to be calculated as smaller than actual particle size. That is, particle size calculation error is likely to be large.

Further, particle size of only a surface layer of rocks in a rock group may be calculated based on three-dimensional shape data of the rock group deposited on a conveyor, the three-dimensional shape data being obtained using a laser rangefinder (see Ref. 1 below). In such a case, calculation of height for each point of each rock may increase computational load. Accordingly, calculating particle size in real time is difficult.

Ref. 1: Matthew J. Thurley, Automated Online Measurement of Particle Size Distribution using 3D Range Data, IFAC Proceedings Volumes, 2009, 42, 134-139

According to the information processing system 100, the information processing device 4, and the information processing method according to the present disclosure, a material in a surface layer may be extracted simply and with high precision from a plurality of deposited materials. Further, a property of a material in a surface layer may be calculated simply and with high precision. For example, in operation of a production process such as in operation of a blast furnace, a material in a surface layer of a raw material such as coke or ore that is deposited and transported on a conveyor may be calculated simply and with high precision. Further, particle size, shape, and the like of a material in a surface layer of deposited coke or ore may be calculated with high precision.

### (Example configuration of information processing system 100)

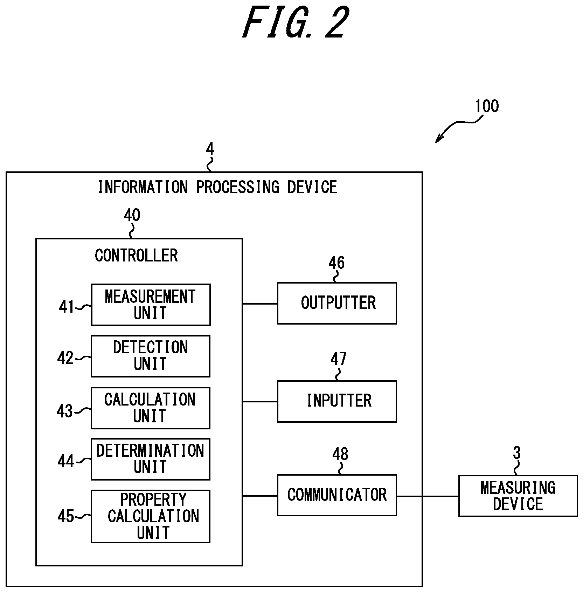

As illustrated in FIG. 1 and FIG. 2, the information processing system 100 according to an embodiment includes the information processing device 4 and a measuring device 3. In the information processing system 100, the measuring device 3 obtains information about particles 2 that are deposited on and transported by a conveyor 1. The information processing device 4 detects the particles 2 that are in a surface layer among the particles 2 that are deposited, and calculates a property thereof.

According to the present embodiment, the conveyor 1 is a coke conveyor used in blast furnaces in the iron and steel industry, but is not limited to this example. Further, the particles 2 are assumed to be coke, which is one example of raw materials used in the iron and steel industry, but are not limited to this example. The particles 2 may include, for example, ore, sintered ore, pellets, limestone, rocks, or the like.

### <Information processing device 4>

The information processing device 4 includes a controller 40, a communicator 48, an outputter 46, and an inputter 47. The controller 40 may include at least one processor, such as a central processing unit (CPU) or graphics processing unit (GPU), to control and manage various functions of the information processing device 4. The controller 40 may include a single processor or a plurality of processors. The controller 40 including at least one processor may realize functions of the information processing device 4 by reading and executing a program stored in a storage, described later.

The controller 40 may be subdivided into components that realize various functions of the information processing device 4. According to the present embodiment, the controller 40 includes a measurement unit 41, a detection unit 42, a calculation unit 43, a determination unit 44, and a property calculation unit 45. Operations of each component of the controller 40 are described below.

The controller 40 may include a storage. The storage stores various types of information or data. The storage may store, for example, a program to be executed in the controller 40, data used in processing executed in the controller 40, a result of processing, and the like. Further, the storage may function as working memory of the controller 40. The storage may be configured as semiconductor memory, for example, but is not limited to this example. For example, the storage may be configured as internal memory of a processor used as the controller 40 or as a hard disk drive (HDD) accessible from the controller 40. The storage may be configured as a non-transitory readable medium. The storage may be configured as an integral part of the controller 40 or as a separate unit from the controller 40.

The communicator 48 may be configured to include a communication interface for communicating with other devices such as the measuring device 3 by wired or wireless means. The communication interface may be configured to communicate with other devices via a network. The communicator 48 may be configured to include input/output ports that input and output data to and from other devices. The communicator 48 sends and receives required data and signals to and from a process computer or high-level system. The communicator 48 may communicate based on a wired communication standard and may communicate based on a wireless communication standard. Example wireless communication standards may include cellular phone communication standards such as 3G, 4G, 5G, and the like. Further, example wireless communication standards may include IEEE 802.11 and Bluetooth^{®} (Bluetooth is a registered trademark in Japan, other countries, or both). The communicator 48 may support one or more of such communication standards. The communicator 48 is not limited to these examples and may communicate with other devices and input/output data based on various standards.

The outputter 46 outputs information obtained from the controller 40. The outputter 46 may notify a user of information by outputting visual information such as text, graphics, images, or the like, either directly or via an external device or the like. The outputter 46 may include a display device, and may be wired or wirelessly connected to a display device. Example display devices include various displays such as liquid crystal displays, for example. The outputter 46 may notify a user or information by outputting auditory information, such as voice, either directly or via an external device or the like. The outputter 46 may include a speaker or other audio output device, and may be wired or wirelessly connected to an audio output device. The outputter 46 may include a vibration device. The outputter 46 may notify a user of information not only by outputting visual information, auditory information, or tactile information, but also by outputting information that a user may perceive with another sense, either directly or via an external device or the like.

The inputter 47 may include an input device that accepts input from a user. Example input devices include keyboards or physical keys, touch panels or touch sensors, and pointing devices such as mice. Input devices are not limited to these examples and a variety of other devices may be included.

### <Measuring device 3>

According to the present embodiment, the measuring device 3 is a laser rangefinder. The laser rangefinder emits a laser beam in a line along the width direction of the conveyor 1 (the paper depth direction in FIG. 1) to measure distance to the particles 2, which are an object to be measured, one line at a time. The particles 2 move in the direction of transport due to being deposited on and conveyed by the conveyor 1. The laser rangefinder measures distance to the particles 2 in a line at a fixed measurement cycle and can generate three-dimensional shape data of the particles 2 by integrating measured values of distance in each line.

The method described above is a method of acquiring three-dimensional shape of an object to be measured by the so-called optical cutting method. As the measuring device 3, a laser rangefinder and data processing means used to implement the optical cutting method may be employed.

A measurement region of the laser rangefinder may be set in a region equal to the width of the conveyor 1 or larger than the width of the conveyor 1. The laser rangefinder may be configured to measure all of the particles 2 conveyed by the conveyor 1.

Measurement density of the three-dimensional shape data is increased by shortening the cycle when the laser rangefinder measures the distance to the particles 2 in a line. According to the present embodiment, measurement frequency is set to 4 kHz (the measurement cycle in this case is 0.25 ms).

The measuring device 3 is not limited to a laser rangefinder, and may be configured as a distance measuring camera using the time of flight (ToF) method. The measuring device 3 generates three-dimensional shape data of the particles 2 deposited on the conveyor 1 or distance data from the measuring device 3 to the particles 2, and outputs to the information processing device 4.

The measuring device 3 may be configured to include an imaging device such as a camera, for example. The measuring device 3 image captures deposited material, including the particles 2 deposited on the conveyor 1, and outputs captured images to the information processing device 4. The measuring device 3 generates image data of the particles 2 deposited on the conveyor 1 and outputs to the information processing device 4. Further, the measuring device 3 may use image data to generate distance data from the measuring device 3 to the particles 2, and output to the information processing device 4. For example, the measuring device 3 may be configured as a stereo camera that generates distance data from by correlating two images using a stereo technique and two cameras. Further, the measuring device 3 may convert image data to distance data based on correlation between luminance of an image capture of the particles 2 and distance to the particles 2 (for example, the higher the luminance, the closer a point is to the measuring device 3).

### (Example of operation of information processing system 100)

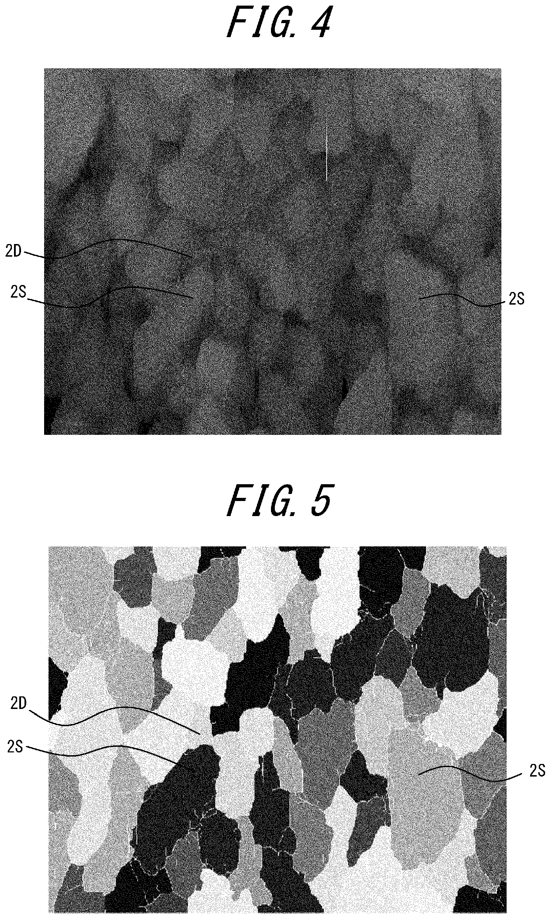

In the information processing system 100, the controller 40 of the information processing device 4 obtains three-dimensional shape data, distance data, or image data of the particles 2 deposited on the conveyor 1 from the measuring device 3 via the communicator 48. Three-dimensional shape data, distance data, or image data may also be referred to as profile data. The controller 40, based on profile data obtained from the measuring device 3, extracts the particles 2 in a surface layer among the particles 2 deposited on the conveyor 1. Further, the controller 40 calculates a property of the particles 2 in the surface layer. The particles 2 deposited on the conveyor 1 may also be referred to as deposited material. The particles 2 in the surface layer of the deposited material may also be referred to as surface layer particles 2S (see FIG. 4, for example). The particles 2 in a lower layer below the surface layer of the deposited material may also be referred to as lower layer particles 2D (see FIG. 4, for example).

### <Extraction of surface layer particles 2S>

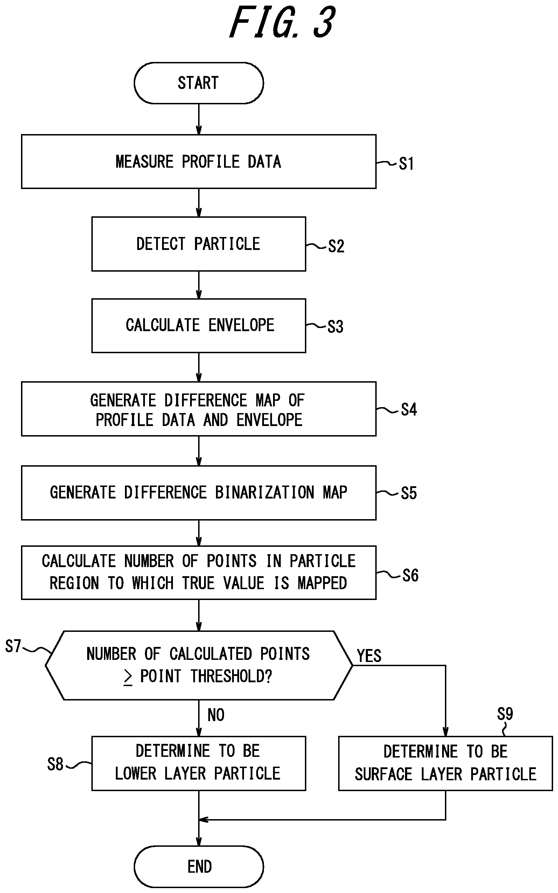

The following is a description, based on flowchart procedures illustrated in FIG. 3, of example operations in which the controller 40 determines and extracts the surface layer particles 2S based on profile data of deposited material. The controller 40 is able to extract the surface layer particles 2S by executing the information processing method including the flowchart procedures illustrated in FIG. 3. The information processing method may be realized as an information processing program to be executed by a processor of the controller 40. The information processing program may be stored on a non-transitory computer-readable storage medium.

The controller 40 measures profile data of deposited material (step S 1). Specifically, the controller 40 may generate profile data of deposited material profile by processing measurement data from the measuring device 3 in the measurement unit 41, and may obtain profile data of deposited material from the measuring device 3. According to the present embodiment, the controller 40 acquires as profile data an image representing distance data for deposited material, as illustrated in FIG. 4. In FIG. 4, the closer to the measuring device 3, the more a point is represented as a point of high luminance (near white color). The surface layer particles 2S are represented by high luminance (near white color). The lower layer particles 2D are represented by lower luminance (near black color) than the surface layer particles 2S.

The controller 40 detects the particles 2 included in deposited material (step S2). Profile data of the particles 2 being transported as deposited material on the conveyor 1 is represented as a single instance of profile data that does not differentiate the particles 2 from each other. The controller 40 needs to differentiate and detect the particles 2 in order to extract the surface layer particles 2S from deposited material and to calculate a property of the surface layer particles 2S.

Specifically, the controller 40 executes signal processing on profile data obtained by measuring shape of surface roughness of deposited material caused by deposition of the particles 2, in order to separate the particles 2 from each other. When calculating particle size as a property of each of the particles 2, for example, the controller 40 can calculate particle size distribution by generating a histogram based on particle size of the particles 2 that have been separated, counting the number of particles in each particle size interval.

The controller 40 may execute a separation process for the particles 2 based on a processing method called a watershed algorithm (see Ref. 2), for example, to separate and identify each of the particles 2 as separate material in profile data of deposited material.

Ref. 2: Meyer, F., (1992), Color image segmentation, Proceedings of International Conference on Image Processing and its Applications, pages 303-306.

The controller 40 may separate and identify each of the particles 2 by setting segments corresponding to each of the particles 2 by executing segmentation processing on profile data of deposited material.

According to the present embodiment, the controller 40 detects each of the particles 2 from profile data of deposited material using an algorithm described in Ref. 2. As illustrated in FIG. 5, the particles 2 detected are represented as different colored regions in profile data. Specifically, the surface layer particles 2S and the lower layer particles 2D that are adjacent in profile data are separated into different regions. Regions into which the particles 2 are separated may also be referred to as particle regions. That is, individual particle regions are well extracted from profile data of deposited material, as illustrated in FIG. 5.

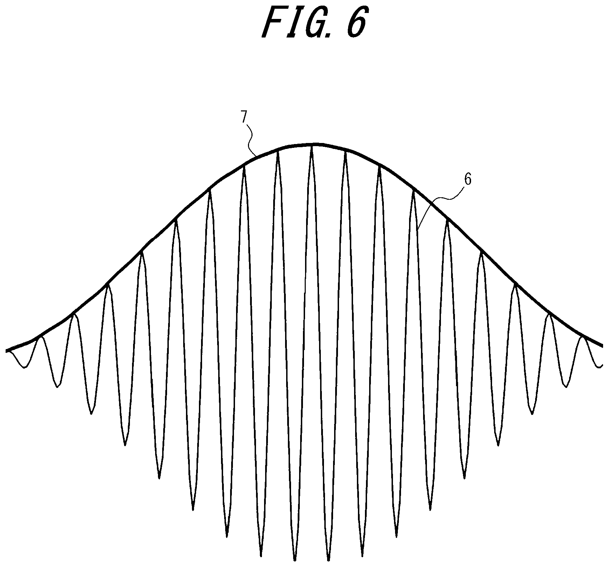

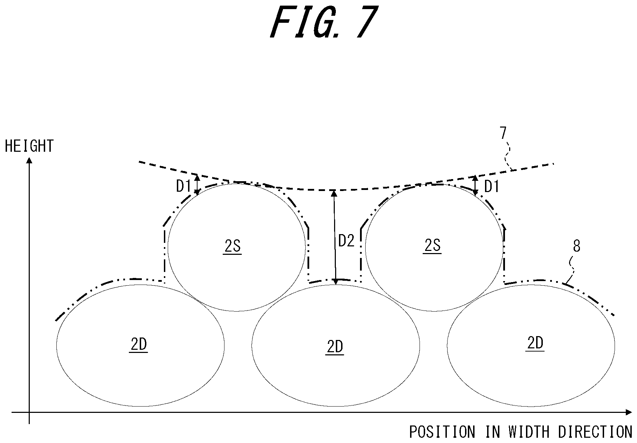

The controller 40 calculates an envelope 7 (see FIG. 6 or FIG. 7) of profile data of deposited material (step S3). The envelope 7 may be generated as a curve tangent to only an upper convex part of a target signal 6, as illustrated in FIG. 6, as used in the fields of audio signal processing or electrical signal processing. Further, the envelope 7 may be generated as a curve tangent to all of a given curve group. In a cross-section of deposited material illustrated in FIG. 7, the controller 40 calculates the envelope 7 as a curve tangent only to an upper convex part of an upper end line 8 connecting upper ends of profile data of deposited material. In FIG. 7, the horizontal axis direction corresponds to the width direction of the conveyor 1. The vertical axis direction corresponds to the height direction of deposited material on the conveyor 1.

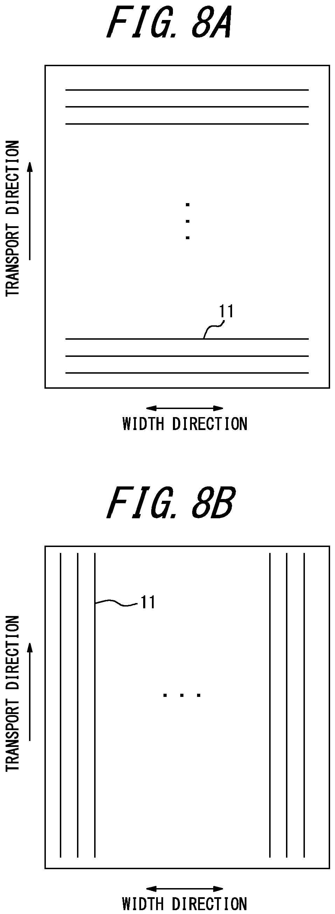

The controller 40 may calculate a plurality of the envelope 7 over the entirety of profile data by calculating the envelope 7 along two-dimensional profile data scanning paths of deposited material. The paths for calculating the envelope 7 may also be referred to as envelope calculation paths 11 (see FIG. 8A and FIG. 8B). Specifically, the controller 40 may calculate the envelope 7 in each path, using lines along the width direction of the conveyor 1 as the envelope calculation paths 11, as illustrated in FIG. 8A. Further, the controller 40 may calculate the envelope 7 along paths in at least two directions. Specifically, the controller 40 may calculate the envelope 7 in each path, using lines along the transport direction of the conveyor 1 as the envelope calculation paths 11, as illustrated in FIG. 8B. The controller 40 may calculate envelope surfaces of two-dimensional profile data of deposited material. Envelope surfaces may be generated as curve surface tangents to all of a given curved surface group. The controller 40 may positively generate the envelope 7 or envelope surfaces by executing library software that implements a function of generating the envelope 7 or envelope surface.

According to the present embodiment, the controller 40 calculates the envelope 7 for 1000 lines in the transport direction (one line containing 800 pieces of data), thereby generating an envelope map in the transport direction represented by a matrix that has 800 × 1000 elements. Further, the controller 40 calculates the envelope 7 for 800 lines in the width direction (one line containing 1000 pieces of data), thereby generating an envelope map in the width direction represented by a matrix that has 800 × 1000 elements. That is, the controller 40 generates envelope maps in the transport direction and the width direction by calculating the envelope 7 along the envelope calculation paths 11 along the transport direction and the width direction. The envelope maps may be said to include 800 × 1000 grid points.

The controller 40 is not limited to the transport direction and the width direction, and may calculate the envelope 7 along another direction. The controller 40 may set an interval between the envelope calculation paths 11 in each direction as appropriate. The narrower the interval of the envelope calculation paths 11, the more robustly and accurately the envelope 7 may be calculated for complex shapes of the particles 2 and deposited material. The controller 40 may, for example, set the interval of the envelope calculation paths 11 based on size of the particles 2. The wider the interval of the envelope calculation paths 11, the more the computational load may be reduced.

The controller 40 calculates a difference between profile data of deposited material and the envelope 7 calculated in step S3 to generate a difference map (step S4). Specifically, in the cross-section of deposited material illustrated in FIG. 7, the controller 40 calculates differences in the height direction between the envelope 7 calculated for the profile data of the deposited material in the cross-section and the upper end line 8 connecting upper ends of the profile data of the deposited material. A difference in deposited material between an upper end of the surface layer particles 2S and the envelope 7 is represented by D1. A difference in deposited material between an upper end of the lower layer particles 2D and the envelope 7 is represented by D2. The controller 40 calculates a difference in the height direction between the envelope 7 and upper end of profile data of deposited material at each grid point on an envelope map and generates a difference map. According to the present embodiment, the controller 40 generates difference maps for envelope maps in the transport direction and the width direction.

The controller 40 generates a difference binarization map (step S5), mapping true values (1, True, or the like) to grid points in a difference map whose difference values are less than a difference threshold and false values (0, False, or the like) to grid points in the difference map whose difference values are greater than or equal to the difference threshold. The controller 40 may map a true value to a grid point with a difference value of zero. The controller 40 may set the difference threshold to a value such as 0.25. Further, the controller 40 generates difference binarization maps for the difference maps generated for the transport direction and the width direction. The controller 40 generates a sum difference binarization map of the two difference maps together by computing logical sums at each grid point of the two difference maps. Logical sums each correspond to an operation that is true when at least one of the two logical values is true.

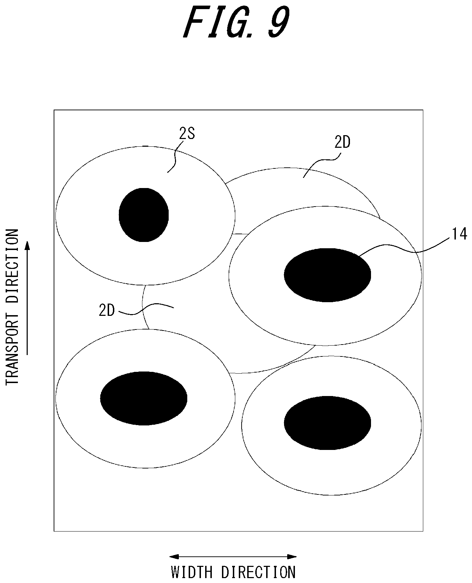

The controller 40 calculates the number of points in each particle region to which a true value is mapped (step S6). The controller 40 may generate a map in which a difference binarization map or a sum difference binarization map is superimposed on a map in which the particles 2, such as the surface layer particles 2S or the lower layer particles 2D, are divided into particle regions, as illustrated in FIG. 9. Regions containing points to which true values are mapped are represented as blacked-out true value regions 14. The controller 40 calculates the number of points to which a true value is mapped by counting the points in each particle region to which a true value is mapped.

The controller 40 determines whether the number of calculated points for which a true value is mapped in a particle region is greater than or equal to a point threshold (step S7). The controller 40 may set the point threshold to 50 points, for example.

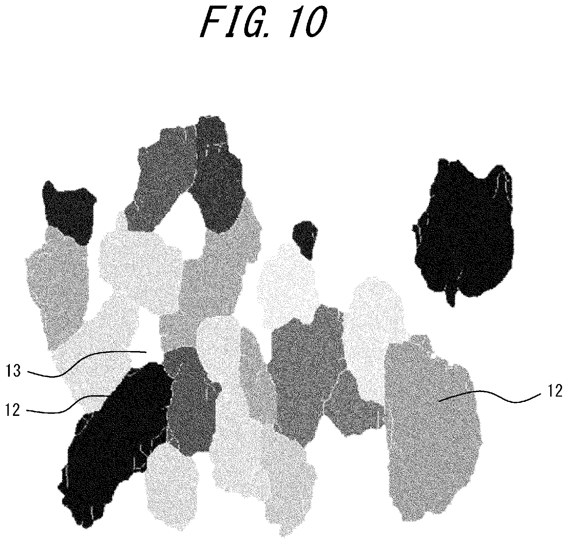

When the number of calculated points is not greater than or equal to the point threshold (step S7: NO), that is, when the number of calculated points is less than the point threshold, the controller 40 determines that the particle 2 in the particle region to be determined is one of the lower layer particles 2D (step S8). The controller 40 does not have to determine whether the particle 2 in the particle region to be determined is one of the surface layer particles 2S or the lower layer particles 2D. When the number of calculated points is greater than or equal to the point threshold (step S7: YES), the controller 40 determines that the particle 2 in the particle region to be determined is one of the surface layer particles 2S (step S9). The controller 40 may set a particle region determined to be one of the surface layer particles 2S to be a surface layer determination region 12 and a particle region determined to be one of the lower layer particles 2D to be a lower layer determination region 13, as illustrated in FIG. 10.

After determining whether the particle 2 is one of the surface layer particles 2S in the procedure of step S8 or S9, the controller 40 ends execution of the procedures of the flowchart in FIG. 3. The controller 40 may repeat procedures from step S6 to S9 for other particle regions to determine whether the particles 2 are the surface layer particles 2S. The controller 40 may display or output a result of determination of the surface layer particles 2S via the outputter 46, and may output a result of determination of the surface layer particles 2S to other devices via the communicator 48.

The controller 40 may execute the procedure of measuring profile data of step S1 as a function of the measurement unit 41. The controller 40 may execute the procedure of detecting the particles 2 of step S2 as a function of the detection unit 42. The controller 40 may perform the procedure of calculating the envelope 7 of step S3 and the procedure of generating the difference map of step S4 as a function of the calculation unit 43. The controller 40 may perform the procedures from the procedure of generating the difference binarization map of step S5 to the determination procedure of step S8 or S9 as functions of the determination unit 44.

The controller 40 calculates the number of points to which a true value is mapped in the procedure of step S6, and determines and extracts the surface layer particles 2S based on the number of points calculated in the procedure of step S7. The controller 40 may determine that a particle region is the surface layer determination region 12 when a true value is mapped to at least one point in the particle region. The controller 40 may calculate a ratio of the number of points to which a true value is mapped to the number of all points in a particle region, and determine that the particle region is the surface layer determination region 12 when the ratio is greater than a ratio threshold.

The controller 40 may be said to determine the surface layer particles 2S using the envelope 7 or envelope surfaces as an index. Aside from the envelope 7 or envelope surfaces, the controller 40 may generate and use as an index, for example, data in which a high-harmonic component in spatial frequency of profile data of deposited material is attenuated. The controller 40 may generate data in which a high-harmonic component is attenuated by passing the profile data of deposited material through a spatial frequency lowpass filter. The controller 40 is able to extract the surface layer particles 2S from deposited material based on results of detecting the particles 2 and an index calculated based on profile data of deposited material.

When calculating the envelope 7 as an index, the controller 40 may set parameters of an algorithm for calculating the envelope 7 to adjust a degree to which the envelope 7 enters recesses of profile data of deposited material. When generating data in which a high-harmonic component of profile data of deposited material is attenuated as an index, the controller 40 may set an attenuation rate of the high-harmonic component. The higher the attenuation rate of the high-harmonic component is set, the less likely that generated data enters recesses of profile data. The controller 40 may accept input of setting information by a user from the inputter 47 and set a parameter for calculating the envelope 7 and the like based on the setting information input.

As described above, according to the information processing device 4 and the information processing method of the present embodiment, the surface layer particles 2S are extracted from deposited material based on an index generated from profile data of the deposited material. Specifically, convex parts of profile data of deposited material is in contact with or approaches within a defined distance to an index such as the envelope 7 or envelope surfaces. The convex parts of the profile data correspond to the upper portions of the surface layer particles 2S. Accordingly, the surface layer particles 2S are extracted based on a positional relationship between an index such as the envelope 7 or envelope surface and convex parts of profile data. The information processing device 4 may also be referred to as a surface layer material detector that detects the surface layer particles 2S.

Computational load for determining the surface layer particles 2S based on an index may be reduced compared to computational load for determining the surface layer particles 2S by analyzing roughness of deposited material. Therefore, according to the information processing device 4 and the information processing method of the present embodiment, extraction of the surface layer particles 2S may be realized with a low computational load. Further, calculation precision may be improved by calculating a property of the surface layer particles 2S that are extracted, as described below. Simple extraction of the surface layer particles 2S contributes to improving calculation precision of a property of the surface layer particles 2S.

### <Calculation of property of surface layer particles 2S>

The controller 40 calculates a property of the particles 2 determined to be the surface layer particles 2S. The controller 40 may realize a function of calculating a property of the particles 2 as the property calculation unit 45. The controller 40 may, for example, calculate particle size of the particles 2 as a property of the particles 2.

The controller 40 may calculate particle size of the surface layer particles 2S by a circular approximate fitting method, for example. A circular approximate fitting method approximates a region determined to be one of the surface layer particles 2S with a true circle having an area equal to the area of the region determined to be one of the surface layer particles 2S, and the diameter of the approximated circle is calculated as the particle size of the one of the surface layer particles 2S. The controller 40 is not limited to a circular approximate fitting method, and may calculate particle size of the surface layer particles 2S by various other methods. The controller 40 may display or output a result of calculation of a property of the surface layer particles 2S via the outputter 46, and may output a result of calculation of a property of the surface layer particles 2S to other devices via the communicator 48.

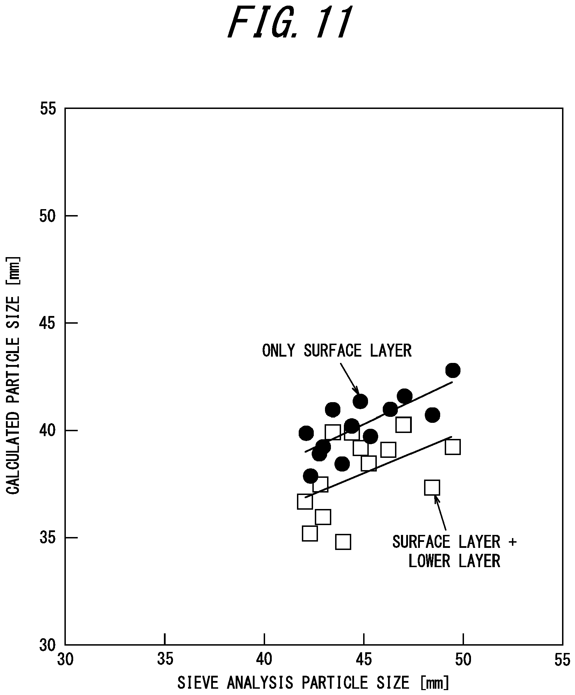

The following is a description of precision of calculation of particle size of the particles 2 according to the present embodiment, with reference to the graph in FIG. 11, which illustrates correlation between results of calculating particle size of the particles 2 according to the present embodiment and particle size calculated by sieve analysis. Particle size of the particles 2 according to the present embodiment is a value calculated from profile data of deposited material, which is a deposited group of the particles 2. Further, particle size calculated by sieve analysis is a value obtained by collectively calculating particle sizes of the same group of the particles 2 of the deposited material for which particle size of the particles 2 was calculated according to the present embodiment, and calculating an average of the particle sizes as the particle size of the group of the particles 2. Specifically, deposited material was prepared with the particles 2 deposited, and particle size of the particles 2 was calculated from profile data. After particle size was calculated from profile data, particle size of the particles 2 in the deposited material was calculated by sieve analysis. Average particle size calculated from profile data of deposited material is an average value of particle size of only the particles 2 extracted as the surface layer particles 2S. Average particle size calculated by sieve analysis is an average value of particle size of all the particles 2, including both the surface layer particles 2S and the lower layer particles 2D in deposited material. In the graph in FIG. 11, circular plots indicate correlation between average values of particle size of only the particles 2 extracted as the surface layer particles 2S and average values of particle size of all the particles 2 in sieve analysis. The correlation coefficient (R^2) for particle size in the surface layer only was calculated to be 0.62. Further, in the graph in FIG. 11, rectangular plots indicate correlation between average values of particle size of all the particles 2, including both the surface layer particles 2S and the lower layer particles 2D, and average values of particle size of all the particles 2 in sieve analysis. The correlation coefficient (R^2) for particle size for the surface layer and the lower layer combined was calculated to be 0.17.

Here, particle size of sieve analysis is considered to be close to actual particle size. The higher the correlation coefficient between calculated particle size and particle size of sieve analysis, the closer the calculated particle size is to actual particle size. Therefore, the higher the correlation coefficient with particle size of sieve analysis, the more precise the particle size calculation. As described above, the correlation coefficient for particle size of the surface layer only is higher than the correlation coefficient for particle size of the surface layer and the lower layer combined, and therefore precision of calculation results for particle size of the surface layer particles 2S only is higher than precision of calculation results for particle size of the surface layer particles 2S and the lower layer particles 2D combined.

As described above, according to the information processing device 4 and the information processing method of the present embodiment, a property of the surface layer particles 2S may be calculated by excluding the lower layer particles 2D and extracting only the surface layer particles 2S that are not hidden by others of the particles 2 from deposited material. In this way, a property of the surface layer particles 2S may be calculated with high precision and clarity, and no missing portion. According to the present embodiment, particle size of the particles 2 is calculated as a property of the particles 2. Various other values may be calculated as a property of the particles 2. For example, shape of contours of the particles 2 may be calculated, based on shape of particle regions as a property of the particles 2. Further, surface profile, including pores, sintered pores, and the like, at surfaces of the particles 2 may be calculated as a property of the particles 2, based on fine irregularities in profile data of deposited material or fine irregularities of boundaries in particle regions. Further, a material property of the particles 2 may be calculated as a property of the particles 2. The information processing device 4 may also be referred to as a property calculation device that calculates a property of the particles 2.

### (Method of operating a blast furnace)

A property of coke used as a raw material in a blast furnace may be calculated by the information processing device 4 and the information processing method described above. That is, the particles 2 may be coke. Coke functions as a reducing agent and as a spacer that secures passage for hot gas to rise in a blast furnace. Therefore, particle size of coke is closely related to gas permeability in a blast furnace. When particle size of coke becomes too small, gas permeability in a blast furnace is reduced due to fewer gaps. Reduced gas permeability may worsen furnace conditions. By calculating particle size of coke in real time before charging coke into a blast furnace, operating conditions may be set according to the particle size of the coke to be charged so as not to worsen furnace conditions.

Therefore, operating conditions of a blast furnace may be set based on a property of the particles 2 calculated by the controller 40 of the information processing device 4. The information processing device 4 may output a result of calculation of a property of the particles 2 to a device that sets operating conditions of a blast furnace. The information processing device 4 may set operating conditions of a blast furnace.

According to the information processing device 4 and the information processing method of the present embodiment, particle size of coke may be calculated in real time before charging into a blast furnace. Real-time calculation of particle size of coke enables intervention in a method of operating a blast furnace according to the particle size of the coke.

As an example, when particle size of coke is smaller, porosity of an upper layer of a blast furnace may be smaller. Smaller porosity may be expected to result in future worsening of gas permeability in the blast furnace. When the gas permeability in the blast furnace is expected to worsen, an operational intervention may be implemented to reduce air flow rate of hot blast.

Another example is that a relationship between particle size distribution at central and inner wall locations in a blast furnace may vary along the vertical direction of the blast furnace. In such a case, it may be expected that a reaction will not be accelerated in the blast furnace. When it is expected that a reaction in the blast furnace will not be accelerated, an operational intervention may be implemented to increase a ratio of coke to ore charged into the blast furnace (coke rate) in order to accelerate the reaction.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and multiple components and steps may be combined into one or divided, as long as no logical inconsistency results. The embodiment according to the present disclosure may be realized as a program executed by a processor provided to a device or as a storage medium on which the program is stored. The scope of the present disclosure should be understood to include these examples.

### REFERENCE SIGNS LIST

- 100: information processing system
- 1: conveyor
- 2: particles (2S: surface layer particles, 2D: lower layer particles)
- 3: measuring device
- 4: information processing device (40: controller, 41: measurement unit, 42: detection unit, 43: calculation unit, 44: determination unit, 45: property calculation unit, 46: outputter, 47: inputter, 48: communicator)
- 6: target signal
- 7: envelope
- 8: upper end line
- 11: envelope calculation paths
- 12: surface layer determination region
- 13: lower layer determination region
- 14: true value regions

## Claims

1. An information processing method comprising:
measuring profile data of deposited material that is a plurality of particles, the profile data including distance data to the deposited material or image data of the deposited material;
detecting each of the plurality of particles based on the profile data;
calculating an index based on the profile data; and
extracting particles in a surface layer among the deposited material based on results of the detecting for each of the plurality of particles and the index calculated based on the profile data.

2. The information processing method according to claim 1, wherein, in the calculating of the index, an envelope or envelope surface is calculated as the index based on the profile data.

3. The information processing method according to claim 1 or 2, wherein, in the extracting of the particles in the surface layer, the particles in the surface layer among the deposited material are extracted based on a difference between the index and the profile data.

4. The information processing method according to any one of claims 1 to 3, further comprising calculating a property of surface layer particles extracted as particles in the surface layer among the deposited material.

5. The information processing method according to claim 4, wherein, in the calculating of the property of the surface layer particles, particle size or shape of the surface layer particles is calculated as the property of the surface layer particles.

6. An information processing device, comprising a controller configured to execute the information processing method according to any one of claims 1 to 5.

7. An information processing system, comprising the information processing device according to claim 6 and a measuring device configured to output the profile data of the deposited material to the information processing device.

8. An information processing program configured to cause a processor to execute the information processing method according to any one of claims 1 to 5.

9. A method of operating a blast furnace, comprising:
calculating a property of a raw material to be charged into a blast furnace as the property of the surface layer particles by performing the information processing method according to claim 4 or 5; and
setting operating conditions of the blast furnace based on a result of the calculating of the property of the raw material.
